# EUROPEAN PATENT APPLICATION

(11) **EP 4 811 122 A1**
(43) Date of publication of application: **23.09.2026**
(21) Application number: 24902479.5
(22) Date of filing: 13.11.2024
(51) Int. Cl.: G06F 8/71

(54) **PRODUCT CONFIGURATION MANAGEMENT AND GENERATION METHOD AND RELATED DEVICE**

(30) Priority: 12.12.2023 CN 202311706587
(71) Applicant: Huawei Technologies Co., Ltd., Shenzhen, Guangdong 518129 (CN)
(72) Inventor: LIU, Jiawen, Shenzhen, Guangdong 518129 (CN); YANG, Qiang, Shenzhen, Guangdong 518129 (CN); HUANG, Huang, Shenzhen, Guangdong 518129 (CN); YUAN, Yulin, Shenzhen, Guangdong 518129 (CN)
(74) Representative: Gill Jennings & Every LLP
(86) International application number: PCT/CN2024/131778
(87) International publication number: WO 2025/124056

(57) **Abstract**

This application discloses a product configuration management and generation method and a related apparatus. The product configuration management and generation method includes: obtaining first intent information, where the first intent information indicates to perform configuration management on a product; determining a first managed object of the product, an attribute of the first managed object, and a value of the attribute of the first managed object based on the first intent information; and generating configuration information of the product based on the first managed object, the attribute of the first managed object, and the value of the attribute of the first managed object. According to embodiments of this application, the configuration information of the product can be generated based on the first managed object, the attribute of the first managed object, and the value of the attribute of the first managed object that are obtained by parsing a user intent, without the need for human expertise in complex domain knowledge nor human involvement to formulate the configuration information of the product through research, workshops, or other manual methods. This helps improve generation efficiency of the configuration information.

## Description

This application claims priority to Chinese Patent Application No. 202311706587.3, filed with the China National Intellectual Property Administration on December 12, 2023, and entitled "PRODUCT CONFIGURATION MANAGEMENT AND GENERATION METHOD AND RELATED APPARATUS", which is incorporated herein by reference in its entirety.

### TECHNICAL FIELD

This application relates to the field of network product technologies, and in particular, to a product configuration management and generation method and a related apparatus.

### BACKGROUND

There are numerous scenario constraints in configuration parameters and feature activation of network services or products. For example, in a configuration scenario of a wireless network device, parameter 1 and parameter 2 may have mutually exclusive constraint relationships. In a product development process, the constraint relationships are compiled into rule codes in different languages, for subsequent validation in the configuration scenario. Currently, formulation, review, and delivery of a product configuration are largely performed manually. For example, a configuration file for a device such as a network element or a base station needs to be designed by a service expert following on-site research, expert discussion, and the like. After the design is complete, the configuration file further needs to be validated and reviewed. The entire process requires high-level service knowledge, and is time-consuming and difficult. It can be learned that how to improve generation efficiency of a product configuration file is one of problems that need to be urgently resolved currently.

### SUMMARY

Embodiments of this application provide a product configuration management and generation method and a related apparatus, to extract information such as a managed object of a product and an attribute of the object based on intent information input by a user, and generate configuration information of the product based on the information, so as to improve generation efficiency of a product configuration.

According to a first aspect, an embodiment of this application provides a product configuration management and generation method. The method includes:
obtaining first intent information, where the first intent information indicates to perform configuration management on a product;
determining a first managed object of the product, an attribute of the first managed object, and a value of the attribute of the first managed object based on the first intent information; and
generating configuration information of the product based on the first managed object, the attribute of the first managed object, and the value of the attribute of the first managed object.

It can be learned that in this embodiment of this application, when the user inputs the first intent information for performing configuration management on the product, an electronic device may determine, through semantic recognition, the first managed object, the attribute of the first managed object, and the value of the attribute of the first managed object that need to be configured by the user, so that the configuration information of the product can be generated based on the first managed object, the attribute of the first managed object, and the value of the attribute of the first managed object that are obtained through parsing, without the need for human expertise in complex domain knowledge nor human involvement to formulate the configuration information of the product through research, workshops, or other manual methods. This helps improve generation efficiency of the configuration information.

In a possible implementation, after generating the configuration information of the product based on the first managed object, the attribute of the first managed object, and the value of the attribute of the first managed object, the method further includes:
obtaining a constraints rule associated with the first managed object and the attribute of the first managed object;
detecting whether the configuration information of the product satisfies the constraints rule associated with the first managed object and the attribute of the first managed object; and
if the configuration information of the product satisfies the constraints rule associated with the first managed object and the attribute of the first managed object, loading the configuration information of the product onto the product.

In the implementation, the configuration information of the product and all constraints rules associated with the attribute of the first managed object are obtained through unified compilation, so that it is not necessary to repeatedly compile the configuration information based on a compilation syntax of each constraints rule during satisfiability validation. This improves efficiency of the satisfiability validation on the configuration information, and improves efficiency of configuration delivery.

In a possible implementation, the first intent information includes a first named entity of the first managed object and a second named entity of the attribute of the first managed object; and generating the configuration information of the product based on the first managed object, the attribute of the first managed object, and the value of the attribute of the first managed object includes:
obtaining a first specification code of the first managed object and a second specification code of the attribute of the first managed object;
replacing the first named entity in the first intent information with the first specification code, and replacing the second named entity in the first intent information with the second specification code, to obtain second intent information; and
generating the configuration information of the product based on the second intent information.

In the implementation, the electronic device replaces the first named entity and the second named entity in the first intent information with the first specification code of the first managed object and the second specification code of the attribute of the first managed object respectively, so that the second intent information that is more easily understood by a machine can be obtained, and the configuration information of the product can be generated based on the second intent information.

In a possible implementation, the method further includes:
if a constraints rule that the configuration information of the product cannot satisfy is present in the constraints rule associated with the first managed object and the attribute of the first managed object, outputting the constraints rule that the configuration information of the product cannot satisfy.

In the implementation, when the constraints rule that the generated configuration information cannot satisfy is present in a database, the electronic device may output the constraints rule, so that the user modifies the first intent information, and generates configuration information that satisfies the constraints rule associated with the attribute of the first managed object.

In a possible implementation, before obtaining the first intent information, the method further includes:
obtaining third intent information, where the third intent information indicates to generate a constraints rule of the product;
determining a second managed object of the product, an attribute of the second managed object, and an attribute constraint of the attribute of the second managed object based on the third intent information; and
generating the constraints rule of the product based on the second managed object of the product, the attribute of the second managed object, and the attribute constraint of the attribute of the second managed object.

In the implementation, when the user inputs the third intent information for performing rule generation for the product, the electronic device may determine, through semantic recognition, the second managed object, the attribute of the second managed object, and the attribute constraint of the attribute of the second managed object based on which the user needs to generate the constraints rule, so that the constraints rule of the product can be generated based on the second managed object, the attribute of the second managed object, and the attribute constraint of the attribute of the second managed object that are obtained through parsing, and the constraints rule of the product can be designed without the needs for human expertise in complex domain knowledge nor a large amount of coding knowledge. This helps improve generation efficiency of the constraints rule.

In a possible implementation, the method further includes:
performing conflict detection and redundancy detection on the generated constraints rule and an existing rule of the product; and
outputting a detection result.

In the implementation, the electronic device may perform conflict detection and redundancy detection on the generated constraints rule and the existing rule of the product by using a formal technology, to ensure accuracy of constraints rule formulation, and help improve efficiency of a constraints rule formulation process.

In a possible implementation, if the generated constraints rule is in a conflict relationship with one or more first existing rules, the detection result includes the one or more first existing rules; or if the generated constraints rule is in a redundancy relationship with one or more second existing rules, the detection result includes the one or more second existing rules.

In the implementation, the electronic device may output an existing rule that is in a conflict or redundancy relationship with the generated constraints rule, so that design personnel modify or delete the rule, or modify the constraints rule according to the rule, to optimize the constraints rule of the product.

In a possible implementation, the method further includes:
compiling the generated constraints rule through unified compilation, to obtain a to-be-stored rule expressed in a unified programming language; and
storing the to-be-stored rule.

In the implementation, all generated constraints rules undergo unified compilation before being stored. When the configuration information is generated subsequently, satisfiability validation can be performed on the configuration information and an existing rule in the database only through unified compilation once. This helps improve efficiency and accuracy of subsequent satisfiability validation when both the rule and a configuration undergo unified compilation.

In a possible implementation, the third intent information includes a third named entity of the second managed object and a fourth named entity of the attribute of the second managed object; and generating the constraints rule of the product based on the second managed object of the product, the attribute of the second managed object, and the attribute constraint of the attribute of the second managed object includes:
obtaining a third specification code of the second managed object and a fourth specification code of the attribute of the second managed object;
replacing the third named entity in the third intent information with the third specification code, and replacing the fourth named entity in the third intent information with the fourth specification code, to obtain fourth intent information; and
generating the constraints rule of the product based on the fourth intent information.

In the implementation, the electronic device replaces the third named entity and the fourth named entity in the third intent information with the third specification code of the second managed object and the fourth specification code of the attribute of the second managed object respectively, so that the fourth intent information that is more easily understood by the machine can be obtained, and the constraints rule of the product can be generated based on the fourth intent information.

According to a second aspect, an embodiment of this application provides a product configuration management and generation apparatus. The apparatus includes an obtaining unit and a processing unit, where
the obtaining unit is configured to obtain first intent information, where the first intent information indicates to perform configuration management on a product; and
the processing unit is configured to: determine a first managed object of the product, an attribute of the first managed object, and a value of the attribute of the first managed object based on the first intent information; and generate configuration information of the product based on the first managed object, the attribute of the first managed object, and the value of the attribute of the first managed object.

In a possible implementation, the obtaining unit is further configured to obtain a constraints rule associated with the first managed object and the attribute of the first managed object; and
the processing unit is further configured to: detect whether the configuration information of the product satisfies the constraints rule associated with the first managed object and the attribute of the first managed object; and if the configuration information of the product satisfies the constraints rule associated with the first managed object and the attribute of the first managed object, load the configuration information of the product onto the product.

In a possible implementation, the first intent information includes a first named entity of the first managed object and a second named entity of the attribute of the first managed object; and in generating the configuration information of the product based on the first managed object, the attribute of the first managed object, and the value of the attribute of the first managed object, the processing unit is specifically configured to:
obtain a first specification code of the first managed object and a second specification code of the attribute of the first managed object;
replace the first named entity in the first intent information with the first specification code, and replace the second named entity in the first intent information with the second specification code, to obtain second intent information; and
generate the configuration information of the product based on the second intent information.

In a possible implementation, the processing unit is further configured to:
if a constraints rule that the configuration information of the product cannot satisfy is present in the constraints rule associated with the first managed object and the attribute of the first managed object, output the constraints rule that the configuration information of the product cannot satisfy.

In a possible implementation, the obtaining unit is further configured to obtain third intent information, where the third intent information indicates to generate a constraints rule of the product; and
the processing unit is further configured to: determine a second managed object of the product, an attribute of the second managed object, and an attribute constraint of the attribute of the second managed object based on the third intent information; and generate the constraints rule of the product based on the second managed object of the product, the attribute of the second managed object, and the attribute constraint of the attribute of the second managed object.

In a possible implementation, the processing unit is further configured to:
perform conflict detection and redundancy detection on the generated constraints rule and an existing rule of the product; and
output a detection result.

In a possible implementation, if the generated constraints rule is in a conflict relationship with one or more first existing rules, the detection result includes the one or more first existing rules; or if the generated constraints rule is in a redundancy relationship with one or more second existing rules, the detection result includes the one or more second existing rules.

In a possible implementation, the processing unit is further configured to:
compile the generated constraints rule through unified compilation, to obtain a to-be-stored rule expressed in a unified programming language; and
store the to-be-stored rule.

In a possible implementation, the third intent information includes a third named entity of the second managed object and a fourth named entity of the attribute of the second managed object; and in generating the constraints rule of the product based on the second managed object of the product, the attribute of the second managed object, and the attribute constraint of the attribute of the second managed object, the processing unit is specifically configured to:
obtain a third specification code of the second managed object and a fourth specification code of the attribute of the second managed object;
replace the third named entity in the third intent information with the third specification code, and replace the fourth named entity in the third intent information with the fourth specification code, to obtain fourth intent information; and
generate the constraints rule of the product based on the fourth intent information.

It should be understood that the method embodiment and the apparatus embodiment are different presentation forms of a same technical concept. Therefore, content in the first aspect of embodiments of this application should be correspondingly applied to the second aspect of embodiments of this application, and same or similar beneficial effects can be achieved. Details are not described herein again.

According to a third aspect, an embodiment of this application provides an electronic device. The electronic device includes a processor, a memory, a communication interface, and one or more programs, where the one or more programs are stored in the memory, and when the one or more programs are configured to be executed by the processor, the one or more programs cooperate with the communication interface to implement the method according to any one of the embodiments of the first aspect.

According to a fourth aspect, an embodiment of this application provides a chip. The chip includes a processor, configured to invoke a computer program from a memory and run the computer program, to cause a device equipped with the chip to perform the method according to any one of the embodiments of the first aspect.

According to a fifth aspect, an embodiment of this application provides a computer-readable storage medium. The computer-readable storage medium stores a computer program to be executed by a device, and when the computer program is executed, the method according to any one of the embodiments of the first aspect is implemented.

According to a sixth aspect, an embodiment of this application provides a computer program product. When the computer program product is run by a device, the device is caused to perform the method according to any one of the embodiments of the first aspect.

### BRIEF DESCRIPTION OF DRAWINGS

To describe the technical solutions in embodiments of this application or in the background more clearly, the following briefly describes the accompanying drawings for describing embodiments of this application or the background.
FIG. 1 is a diagram of formulation, validation, and storage of a constraints rule in a related technology;
FIG. 2 is a diagram of formulation, validation, and delivery of a configuration in a related technology;
FIG. 3 is a diagram of a system architecture according to an embodiment of this application;
FIG. 4 is a schematic flowchart of a product configuration management and generation method according to an embodiment of this application;
FIG. 5 is a diagram of generation and management of configuration information based on a software system architecture according to an embodiment of this application;
FIG. 6 is a diagram of an overall procedure of generation, validation, and delivery of configuration information according to an embodiment of this application;
FIG. 7 is a schematic flowchart of another product configuration management and generation method according to an embodiment of this application;
FIG. 8 is a diagram of generation and management of a constraints rule based on a software system architecture according to an embodiment of this application;
FIG. 9 is a diagram of an overall procedure of generation, validation, and storage of a constraints rule according to an embodiment of this application;
FIG. 10 is a diagram of a structure of a product configuration management and generation apparatus according to an embodiment of this application; and
FIG. 11 is a diagram of a structure of an electronic device according to an embodiment of this application.

### DESCRIPTION OF EMBODIMENTS

In the specification, the claims, and the accompanying drawings of this application, terms such as "first", "second", "third", and "fourth" are intended to distinguish between different objects but do not indicate a particular order. In addition, terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

"Embodiment" mentioned in this specification means that particular features, structures, or characteristics described with reference to the embodiment may be included in at least one embodiment of this application. The term shown in various locations in this specification may not necessarily refer to a same embodiment or an independent or optional embodiment that is mutually exclusive with another embodiment. A person skilled in the art explicitly or implicitly understands that embodiments described in this specification may be combined with other embodiments.

Terms such as "component", "module", and "system" used in this specification are used for representing computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a terminal device and an application that runs on the terminal device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

First, related terms and related technical background in this application are briefly described, to facilitate understanding of a person skilled in the art.

Object configuration: object configuration.

Configuration constraints rules: configuration constraints rules.

Managed object class: managed object class, MOC, a class of a managed object, where for example, the managed object class may be a wireless configuration managed object class.

Managed object instance: managed object instance, MOI, an object instance that is managed, where for example, the managed object instance may be a wireless configuration managed object instance.

Intent: aim/goal, specifically a target to be achieved, where the intent may not include detailed steps required for achieving the target.

Description: description, a detailed description of a process, including steps or operations in the process.

In a configuration scenario of a wireless network device, with rapid development and application of a 5th generation mobile communication technology (5th Generation Mobile Communication Technology, 5G), new wireless network devices are continuously launched, with existing wireless network devices, leading to a complex case in which there are a plurality of device types, standards, and combinations of new and old hardware for configuration and operation and maintenance of the wireless network devices. This brings significant challenges to formulation, validation, and delivery of configuration data, and severely affects site operation and maintenance efficiency.

With the launch of some large-scale language models, related research has proposed an idea of using such models to formulate configuration constraints rules and configuration information of wireless network devices. Although the large language models have strong language perception and logical reasoning capabilities, the large language models are primarily trained based on a general-purpose corpus, and there is a lack of domain knowledge for a wireless network device configuration. As a result, it is difficult to efficiently complete formulation, validation, and the like of the configuration constraints rules and the configuration information. In addition, the models have specific requirements for time and computing power, leading to high usage costs. Most existing large language model tools are generative models that face significant limitations in an inference quantity and an inference speed and cannot satisfy efficiency requirements of services.

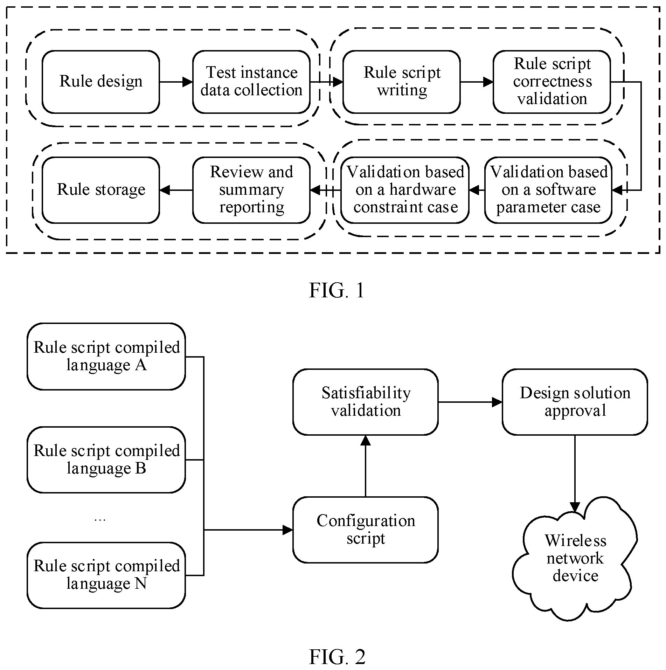

Formulation, validation, and the like of constraints rules of existing device configurations are largely performed manually. Because different device configurations relate to different domain knowledge, and the constraints rules may be described in different program syntaxes in different scenarios, related personnel need to master high-level domain knowledge and coding knowledge. As shown in FIG. 1, a procedure of formulation, validation, and storage of a constraints rule may include the following steps.
(1) Design personnel first need to design a rule based on experience and collect test instance data for rule test validation.
(2) Development personnel write a rule script based on a rule syntax and perform correctness test validation on the rule script based on the instance data.
(3) After the test validation succeeds, perform instance validation on the rule script based on a software parameter and a hardware constraint case.
(4) After the instance validation succeeds, perform rule review and summary reporting; and after the review succeeds, store a generated rule.

A constraints rule is usually compiled into a script for storage. Description syntaxes used for scripts in compilation rules vary with different regions and systems, including various description syntaxes such as a natural language, an extensible markup language (eXtensible Markup Language, XML) file, a Lua script, and an object constraint language (Object Constraint Language, OCL). There is no unified rule syntax for expressing the constraints rule. Different syntaxes are used for formulation of rules in different regional sites, requiring adaptation to different compilers. During rule computation, rules in different languages may be repeatedly compiled, leading to low computing efficiency. A large quantity of constraints rules are manually reviewed in a formulation process, and it is difficult to accurately evaluate legality and validity of the rules. In addition, when there are a large quantity of existing rules, manual redundancy detection and conflict detection are highly time-consuming, and it is difficult to efficiently and accurately detect redundant or conflicting rules, and clear or modify the redundant or conflicting rules.

Formulation, validation, and delivery of an existing device configuration file are also largely performed manually. As shown in FIG. 2, a procedure of formulation, validation, and delivery of a device configuration may include the following steps.
a. Related personnel write a configuration script based on experience and a syntax specification for the device configuration.
b. Based on a plurality of compiled languages (for example, rule script compiled language A, rule script compiled language B, ..., rule script compiled language N) used for a constraints rule, perform multi-language compilation on generated configuration information, and perform satisfiability validation on compiled configuration information and the constraints rule in a database.
c. After the validation succeeds, approve a configuration design solution; and after the approval succeeds, deliver a configuration to a device to make the configuration take effect.

Due to a requirement for high-level domain professional knowledge for a wireless network device configuration, formulation of a configuration file needs on-site research and discussion by design personnel, leading to a high design difficulty. In addition, existing rules are compiled and stored by using script files of different specifications, and rule languages include different syntaxes. To perform matching validation between a configuration file and a related constraints rule, the configuration file needs to be adapted to different syntax rules for compilation and validation, leading to low validation efficiency. After multi-level validation is complete, a configuration solution still needs to be reviewed manually, to finally determine whether to deliver the configuration solution. Approval efficiency and delivery efficiency are not high.

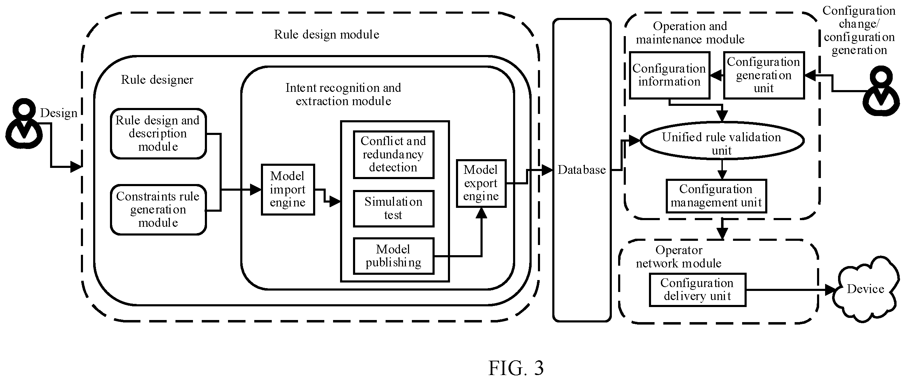

To overcome disadvantages and shortcomings of conventional technologies, this application provides a product configuration management and generation method. The method may be implemented based on a system architecture shown in FIG. 3. As shown in FIG. 3, the system architecture mainly includes a rule design module, an operation and maintenance module, and an operator network module. The rule design module provides a rule designer. The rule designer includes a rule design and description module, an intent recognition and extraction module, and a constraints rule generation module. The rule design and description module is used by a rule design user to input three pieces of content: a managed object description, an object attribute description, and an attribute constraint description. The intent recognition and extraction module is configured to extract key information in the rule managed object, managed object attribute, and attribute constraint description based on an input from the rule design user, and then verify a managed object and an object attribute by using a model import engine. After the verification succeeds, the rule managed object, managed object attribute, and attribute constraint description are returned to the constraints rule generation module to generate a constraints rule. The model import engine performs conflict and redundancy detection and a simulation test on the constraints rule generated by the constraints rule generation module. The user may modify or redesign the rule based on detection and test results by using the rule design module. A model export engine publishes the constraints rule on which validation succeeds, and the constraints rule is stored. An operator inputs configuration change/configuration generation information in the operation and maintenance module, and a configuration generation unit extracts key information in configuration change/configuration generation information, and generates configuration information of a device based on the key information. A unified rule validation unit performs a rule query in a database, and performs satisfiability validation on the generated configuration information and a returned queried constraints rule. A configuration management unit may modify the generated configuration information or the configuration change/configuration generation information based on a satisfiability validation result, and the like. For example, the operation and maintenance module may run on a cloud, or may run locally. The operator network module provides a network connection service, and a configuration delivery unit loads the configuration information on which the validation succeeds onto the device to make the configuration information take effect.

The technical solutions provided in this application are described in detail with reference to specific implementations.

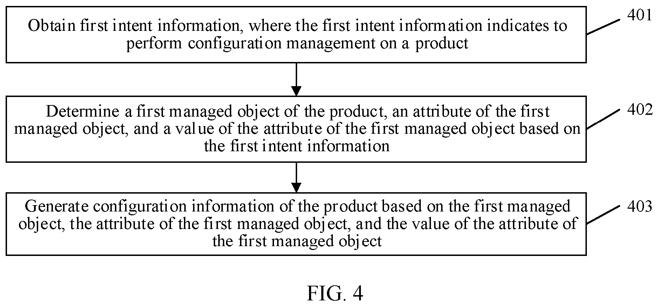

FIG. 4 is a schematic flowchart of a product configuration management and generation method according to an embodiment of this application. The method may be implemented based on the system architecture shown in FIG. 3, and may be specifically performed by an electronic device. As shown in FIG. 4, the method includes step 401 to step 403.

401: Obtain first intent information, where the first intent information indicates to perform configuration management on a product.

In this embodiment of this application, the product may be a hardware product (for example, a wireless network device) or a software product. The first intent information may include a first named entity of a first managed object of the product, a second named entity of an attribute of the first managed object, and a value of the attribute of the first managed object. The first intent information may be: performing configuration change, configuration optimization, configuration generation, or the like on the first managed object of the product. For example, a user inputs "set a positioning function of a module X to 1". The first managed object is a managed object that the user currently wants to configure. For example, the first intent information may be a natural language description input by the user, for example, may be a text or a voice. For example, the user may input, by using the electronic device, the first intent information in an operation and maintenance module of a unified configuration validation technical system.

402: Determine the first managed object of the product, the attribute of the first managed object, and the value of the attribute of the first managed object based on the first intent information.

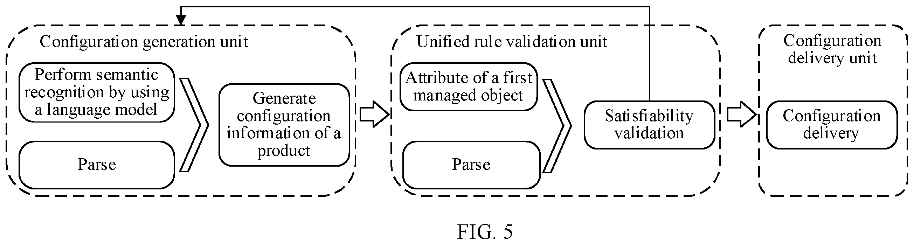

In this embodiment of this application, the electronic device may perform semantic recognition on the first intent information by using a language model, and parse the first intent information to obtain the first managed object, the attribute of the first managed object, and the value of the attribute of the first managed object that are included in the first intent information. For example, as shown in FIG. 5, a configuration generation unit in an operation and maintenance module of a unified configuration validation technical system performs semantic recognition by invoking a language model, and parses a semantic recognition result to obtain three content parts: the first managed object, the attribute of the first managed object, and the value of the attribute of the first managed object.

403: Generate configuration information of the product based on the first managed object, the attribute of the first managed object, and the value of the attribute of the first managed object.

In this embodiment of this application, as shown in FIG. 5, based on the first managed object, the attribute of the first managed object, and the value of the attribute of the first managed object that are obtained through parsing, the electronic device may generate corresponding configuration information by using the configuration generation unit. For example, the configuration information is in a form of a configuration script or a configuration file. For example, the configuration information may be obtained through unified compilation. For example, compilation is performed by using a unified compiled language or a unified syntax specification. The compiled language or the syntax specification is the same as a compiled language or a syntax of a constraints rule in a database, that is, the configuration information of the product and the existing rule in the database are both obtained through unified compilation.

For example, after obtaining, through parsing, the first managed object, the attribute of the first managed object, and the value of the attribute of the first managed object, the electronic device further obtains a first specification code of the first managed object and a second specification code of the attribute of the first managed object. Specifically, based on product knowledge, all associated managed objects associated with the product and attributes of all the associated managed objects are first obtained by querying the database, then whether the first managed object is present in the associated managed objects and whether the attribute of the first managed object is present in the attributes of the associated managed objects are verified, and a verification result is returned. If the first managed object and the attribute of the first managed object are present, all first specification codes associated with the first managed object and all second specification codes associated with the attribute of the first managed object are returned. If the first managed object is not present, a verification failure is returned, and creation of the configuration information is invalid. When the first specification code and the second specification code are obtained, the electronic device replaces the first named entity in the first intent information with the first specification code, and replaces the second named entity in the first intent information with the second specification code, to obtain second intent information, where the second intent information is intent information after replacement. For example, a first specification code of the module X is "MOC1Cell", and a second specification code of the positioning function is "location_func". In this case, the electronic device may replace named entities in the first intent information with the specification codes, and generate configuration information based on content, to be specific, the first specification code, the second specification code, and the value of the attribute in the second intent information.

In the implementation, the electronic device replaces the first named entity and the second named entity in the first intent information with the first specification code of the first managed object and the second specification code of the attribute of the first managed object respectively, so that the second intent information that is more easily understood by a machine can be obtained, and the configuration information of the product can be generated based on the second intent information.

For example, after generating the configuration information of the product based on the first managed object, the attribute of the first managed object, and the value of the attribute of the first managed object, the method further includes:
obtaining a constraints rule associated with the first managed object and the attribute of the first managed object;
detecting whether the configuration information of the product satisfies the constraints rule associated with the first managed object and the attribute of the first managed object; and
if the configuration information of the product satisfies the constraints rule associated with the first managed object and the attribute of the first managed object, loading the configuration information of the product onto the product.

In this embodiment of this application, as shown in FIG. 5, the electronic device may use the first managed object and the attribute of the first managed object that are obtained through parsing to perform retrieval in the database by using a unified rule validation unit, to obtain all constraints rules associated with the first managed object and the attribute of the first managed object, and then detects whether the generated configuration information satisfies the constraints rules, that is, performs satisfiability validation. If the satisfiability validation succeeds, that is, the configuration information of the product satisfies all the constraints rules associated with the first managed object and the attribute of the first managed object, the electronic device performs configuration delivery by using a configuration delivery unit, that is, loads the configuration information of the product onto the product.

In the implementation, the configuration information of the product and all the constraints rules associated with the first managed object and the attribute of the first managed object are obtained through unified compilation, so that it is not necessary to repeatedly compile the configuration information based on a compilation syntax of each constraints rule during satisfiability validation. This improves efficiency of the satisfiability validation on the configuration information, and improves efficiency of configuration delivery.

For example, if a constraints rule that the configuration information of the product cannot satisfy is present in the constraints rule associated with the first managed object and the attribute of the first managed object, a validation failure is returned, and the constraints rule that the configuration information of the product cannot satisfy is output, so that the user can modify the first intent information according to the constraints rule, and regenerate configuration information of the product based on modified intent information, or may directly modify the generated configuration information. Optionally, a script identifier corresponding to the constraints rule that the configuration information of the product cannot satisfy may be further output, so that the user quickly finds, based on the script identifier, a script corresponding to the constraints rule.

In the implementation, when the constraints rule that the generated configuration information cannot satisfy is present in the database, the electronic device may output the constraints rule, so that the user modifies the first intent information, and generates configuration information that satisfies the constraints rule associated with the attribute of the first managed object.

It can be learned that in this embodiment of this application, when the user inputs the first intent information for performing configuration management on the product, the electronic device may determine, through semantic recognition, the first managed object, the attribute of the first managed object, and the value of the attribute of the first managed object that need to be configured by the user, so that the configuration information of the product can be generated based on the first managed object, the attribute of the first managed object, and the value of the attribute of the first managed object that are obtained through parsing, without the need for human expertise in complex domain knowledge nor human involvement to formulate the configuration information of the product through research, workshops, or other manual methods. This helps improve generation efficiency of the configuration information.

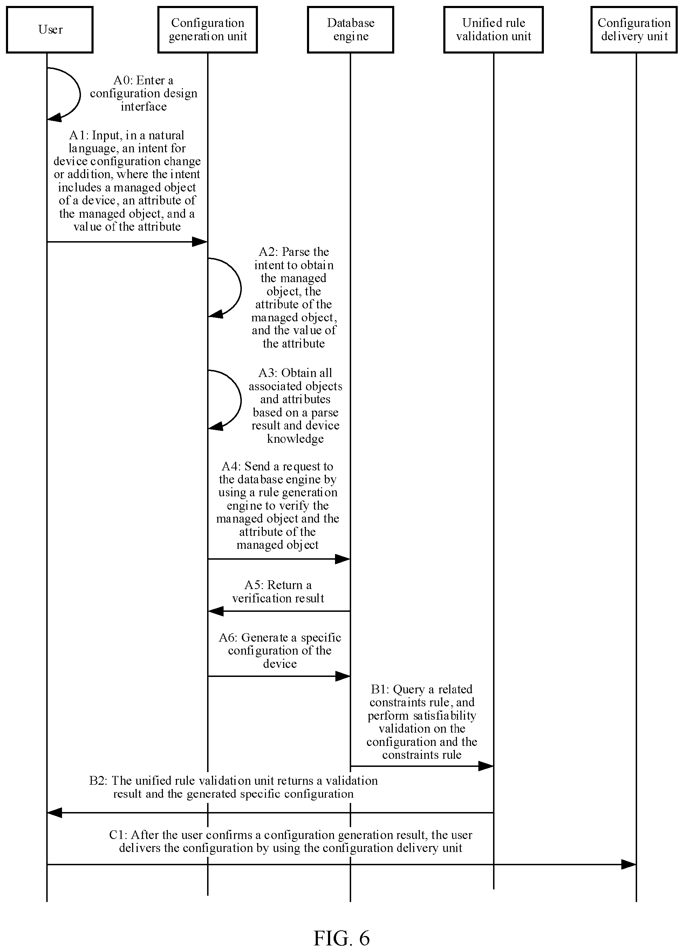

For a better understanding of this solution, the following briefly describes an overall procedure of generation, validation, and delivery of configuration information of a product. As shown in FIG. 6, the procedure includes the following steps.

A0: A user enters a configuration design interface.

A1: The user inputs, in a natural language, an intent for device configuration change or addition, where the intent includes a managed object of a device, an attribute of the managed object, and a value of the attribute.

A2: A configuration generation unit performs semantic recognition based on the intent of the user, and parses the intent to obtain three parts: the managed object, the attribute of the managed object, and the value of the attribute.

A3: The configuration generation unit obtains all associated objects and attributes based on a parse result and device knowledge.

A4: The configuration generation unit sends a request to a database engine by using a rule generation engine to verify the managed object and the attribute of the managed object.

A5: The database engine returns a verification result. If the verification succeeds, a specification code of the managed object and a specification code of the attribute of the managed object are returned. If the verification fails, a verification failure is returned, and creation of the configuration information is invalid.

A6: The configuration generation unit replaces the managed object and the attribute of the managed object in the natural language with the specification codes based on the verification result, and generates a specific configuration of the device based on a value description of the attribute.

B1: After the user confirms the generated configuration, a unified rule validation unit sends a request to the database engine based on the attribute of the managed object to query a related constraints rule, and performs satisfiability validation on the configuration and the constraints rule.

B2: The unified rule validation unit returns a validation result and a generated specific configuration. If the validation fails, a specific rule that cannot be satisfied and a script identifier of the rule that cannot be satisfied are returned. The user modifies the configuration based on feedback and iterates through steps A1 to B1. If the validation succeeds, C1 is performed.

C1: After the user confirms a configuration generation result, the user delivers the configuration by using a configuration delivery unit, and the configuration takes effect on the device.

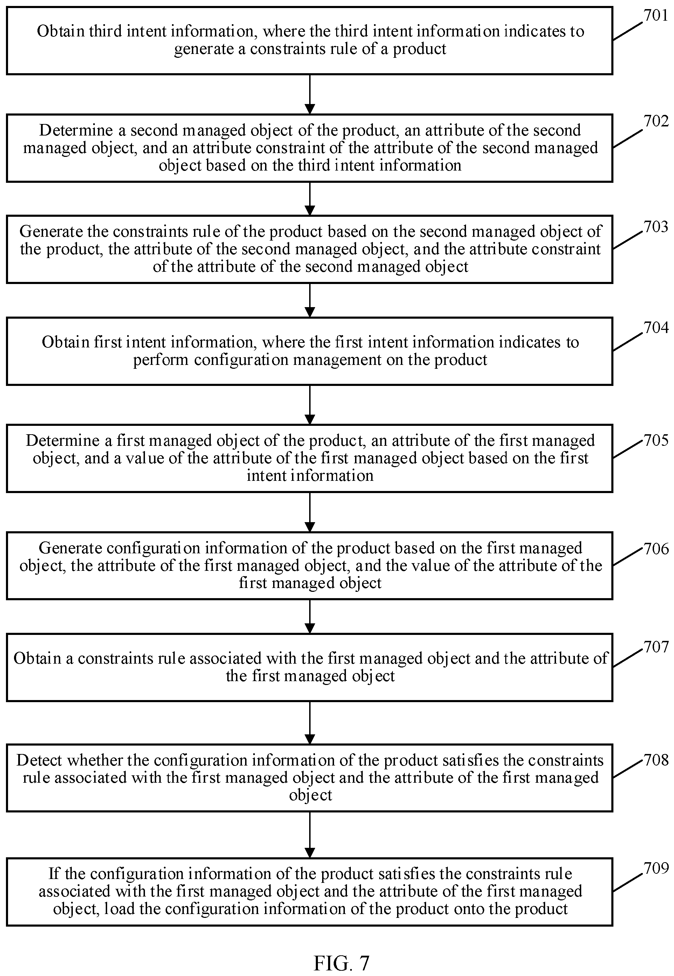

FIG. 7 is a schematic flowchart of a product configuration management and generation method according to an embodiment of this application. As shown in FIG. 7, the method includes step 701 to step 709.

701: Obtain third intent information, where the third intent information indicates to generate a constraints rule of a product.

In this embodiment of this application, the third intent information may include a third named entity of a second managed object of the product, a fourth named entity of an attribute of the second managed object, and an attribute constraint of the attribute of the second managed object. For example, rule design personnel input "a scheduling function needs to be disabled when a positioning function is enabled in a xx module of a cell." The second managed object is a managed object that is of the product and that is in configuration information of a constraint for which a constraints rule needs to be generated. For example, the second managed object may be a first managed object, or may be a managed object other than the first managed object. For example, the third intent information may be a natural language description input by the design personnel, for example, may be a text or a voice. For example, the design personnel may input, by using an electronic device, the third intent information in a rule design module of a unified configuration validation technical system.

702: Determine the second managed object of the product, the attribute of the second managed object, and the attribute constraint of the attribute of the second managed object based on the third intent information.

In this embodiment of this application, the electronic device may perform semantic recognition on the third intent information by using a language model, and parse the third intent information to obtain the second managed object, the attribute of the second managed object, and the attribute constraint of the attribute of the second managed object that are included in the third intent information. An example is as follows:
Second managed object: xx module;
attribute of the second managed object: positioning function and scheduling function; and
attribute constraint: a scheduling function needs to be disabled when a positioning function is enabled.

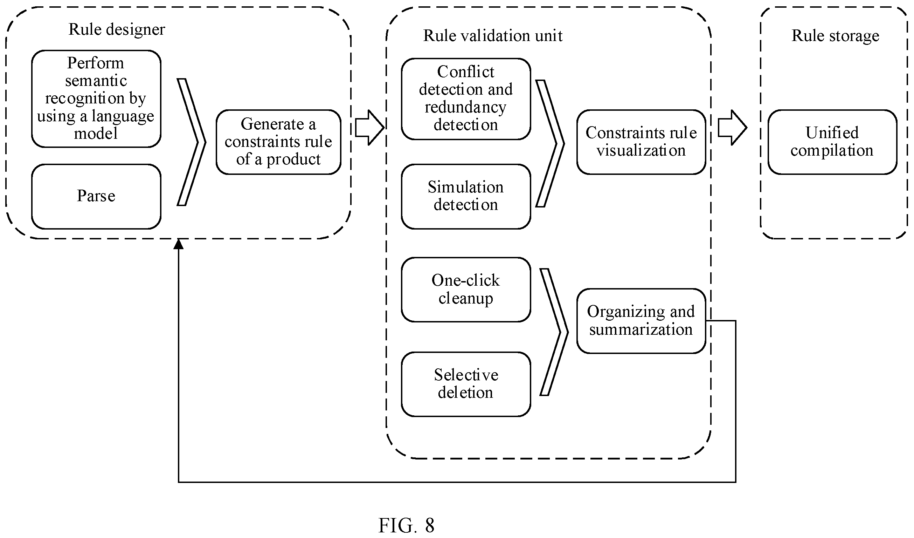

For example, as shown in FIG. 8, a rule designer in the rule design module of the unified configuration validation technical system performs semantic recognition by invoking the language model, and parses a semantic recognition result to obtain three content parts: the second managed object, the attribute of the second managed object, and the attribute constraint of the attribute of the second managed object.

703: Generate the constraints rule of the product based on the second managed object of the product, the attribute of the second managed object, and the attribute constraint of the attribute of the second managed object.

In this embodiment of this application, as shown in FIG. 8, the electronic device may generate the corresponding constraints rule by using the rule designer based on the second managed object, the attribute of the second managed object, and the attribute constraint of the attribute of the second managed object that are obtained through parsing. For example, the constraints rule is in a form of a rule script. Based on a specific compilation syntax, a constraints rule script of the product is obtained through compilation by using a specific compilation rule.

In the implementation, when a user inputs the third intent information for performing rule generation for the product, the electronic device may determine, through semantic recognition, the second managed object, the attribute of the second managed object, and the attribute constraint of the attribute of the second managed object based on which the user needs to generate the constraints rule, so that the constraints rule of the product can be generated based on the second managed object, the attribute of the second managed object, and the attribute constraint that are obtained through parsing, and the constraints rule of the product can be designed without the needs for human expertise in complex domain knowledge nor a large amount of coding knowledge. This helps improve generation efficiency of the constraints rule.

For example, after obtaining, through parsing, the second managed object, the attribute of the second managed object, and the attribute constraint of the attribute of the second managed object, the electronic device further obtains a third specification code of the second managed object and a fourth specification code of the attribute of the second managed object by using the rule designer. Specifically, fuzzy matching is performed in a database based on the second managed object and the attribute of the second managed object, to determine whether there are the second managed object and the attribute of the second managed object in the database, and a verification result is returned. If the second managed object and the attribute of the second managed object are present, the third specification code of the second managed object and the fourth specification code of the attribute of the second managed object are returned. An example is as follows:
Specification code of the xx module: MOC2Cell;
specification code of the positioning function of the xx module: location_func; and
specification code of the scheduling function of the xx module: schedule_func.

When the third specification code and the fourth specification code are obtained, the electronic device replaces the third named entity in the third intent information with the third specification code, and replaces the fourth named entity in the third intent information with the fourth specification code, to obtain fourth intent information, where the fourth intent information is intent information after replacement. The electrondevice generates the constraints rule of the product based on the third specification code, the fourth specification code, and the attribute constraint of the attribute in the fourth intent information.

In the implementation, the electronic device replaces the third named entity and the fourth named entity in the third intent information with the third specification code of the second managed object and the fourth specification code of the attribute of the second managed object respectively, so that the fourth intent information that is more easily understood by a machine can be obtained, and the constraints rule of the product can be generated based on the fourth intent information.

For example, the method further includes:
performing conflict detection and redundancy detection on the generated constraints rule and an existing rule of the product; and
outputting a detection result.

For example, as shown in FIG. 8, the electronic device may perform conflict detection and redundancy detection on the generated constraints rule and the existing rule of the product by using a rule validation unit, and output the detection result by using the rule validation unit.

In the implementation, the electronic device may perform conflict detection and redundancy detection on the generated constraints rule and the existing rule of the product by using a formal technology, to ensure accuracy of constraints rule formulation, and help improve efficiency of a constraints rule formulation process.

For example, if the generated constraints rule is in a conflict relationship with one or more first existing rules, the detection result includes the one or more first existing rules; or if the generated constraints rule is in a redundancy relationship with one or more second existing rules, the detection result includes the one or more second existing rules.

In this embodiment of this application, the electronic device outputs, by using the rule validation unit, the one or more first existing rules that are conflict with the generated constraints rule and the one or more second existing rules that are in a redundancy relationship with the generated constraints rule. The rule design personnel may modify the one or more first existing rules, or based on the one or more first existing rules and corresponding redundancy or conflict relationships, the rule design personnel may modify the third intent information or directly modify the generated constraints rule. As shown in FIG. 8, for the one or more second existing rules, the rule validation unit provides one-click cleanup and selective deletion functions, to organize and summarize the constraints rule of the product. When the rule design personnel trigger the one-click cleanup function, the electronic device may delete the one or more second existing rules. When the rule design personnel select a part or all of the one or more second existing rules, the electronic device may delete the selected part or all of the one or more second existing rules.

In the implementation, the electronic device may output an existing rule that is in a conflict or redundancy relationship with the generated constraints rule, so that the design personnel modify or delete the rule, or modify the constraints rule according to the rule, to optimize the constraints rule of the product.

For example, as shown in FIG. 8, the electronic device may further perform simulation detection on the generated constraints rule by using the rule validation unit, that is, detect, by using a simulation technology, whether the generated constraints rule affects the existing rule of the product.

For example, as shown in FIG. 8, based on results of conflict detection, redundancy detection, and simulation detection, the electronic device may present all constraints rules of the product and a relationship between the constraints rules in a form of a topology graph, that is, visualize all the constraints rules and the relationship between the constraints rules. In the topology graph, a node may represent a corresponding constraints rule, and an edge between nodes may represent a relationship between corresponding constraints rules.

For example, as shown in FIG. 8, after the rule design personnel modify a conflicting rule and clean up a redundant rule, the electronic device compiles the generated constraints rule through unified compilation, to obtain a to-be-stored rule expressed in a unified syntax, and stores the to-be-stored rule. The unified compilation refers to expressing the generated constraints rule in a unified rule syntax. For example, if the one or more first existing rules that are conflict with the generated constraints rule and the one or more second existing rules that are in a redundancy relationship with the generated constraints rule are not present, the electronic device directly compiles the generated constraints rule through unified compilation, to obtain a to-be-stored rule expressed in a unified programming language, and stores the to-be-stored rule.

In the implementation, all generated constraints rules undergo unified compilation before being stored. When the configuration information is generated subsequently, satisfiability validation can be performed on the configuration information and an existing rule in the database only through unified compilation once. This helps improve efficiency and accuracy of subsequent satisfiability validation when both the rule and a configuration undergo unified compilation.

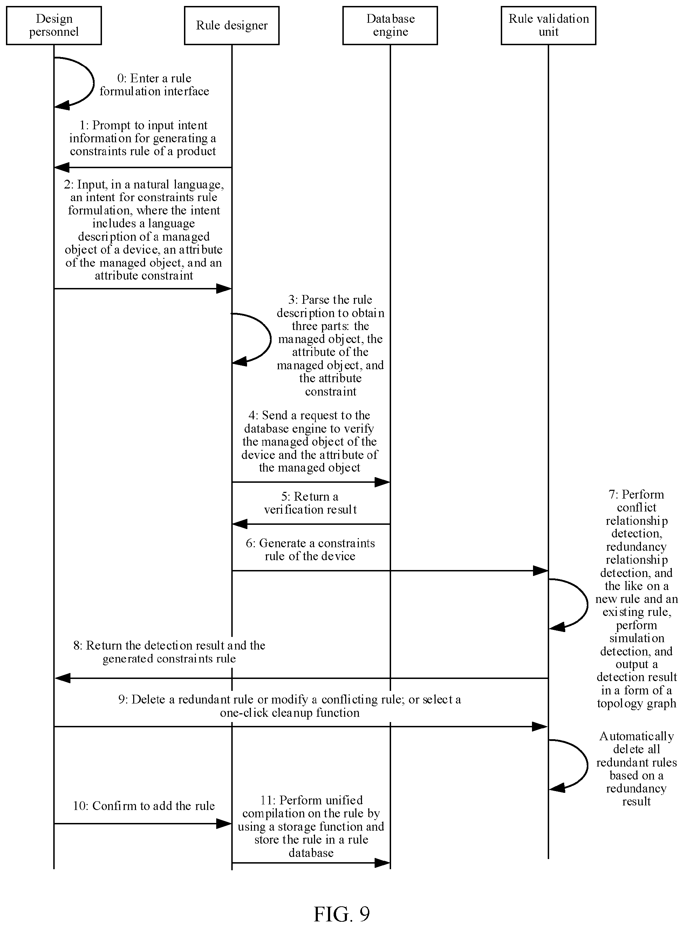

For a better understanding of this solution, the following briefly describes an overall procedure of generation, validation, and storage of a constraints rule of a product. As shown in FIG. 9, the procedure includes the following steps.
0: Design personnel enter a rule formulation interface.
1: A rule designer prompts to input intent information for generating the constraints rule of the product.
2: The design personnel input, in a natural language, an intent for constraints rule formulation, where the intent includes a language description of a managed object of a device, an attribute of the managed object, and an attribute constraint.
3: The rule designer parses, based on the user natural language rule description by using a large language model, the rule description to obtain three parts: the managed object, the attribute of the managed object, and the attribute constraint.
4: The rule designer sends a request to a database engine to verify the managed object of the device and the attribute of the managed object, to verify whether there are a standard managed object and an attribute that match the attribute in a database.
5: The database engine returns a verification result. If the verification succeeds, a specification code of the managed object and a specification code of the attribute of the managed object are returned. If the verification fails, a verification failure is returned, and creation of the constraints rule is invalid.
6: The rule designer replaces the managed object and the attribute of the managed object in the natural language with the specification codes based on the verification result, and generates a constraints rule of the device based on the attribute constraint of the attribute.
7: A rule validation unit performs conflict relationship detection, redundancy relationship detection, and the like on a new rule and an existing rule, performs simulation detection, and outputs a detection result in a form of a topology graph.
8: The rule validation unit returns the detection result and the generated constraints rule. If a rule that is conflicts with the generated constraints rule or a rule that is in a redundancy relationship with the generated constraints rule is present in the existing rule, the detection result includes the conflicting rule or the redundant rule.
9: The design personnel may selectively delete the redundant rule or modify the conflicting rule based on the detection result; or the design personnel may select a one-click cleanup function, and the rule validation unit automatically deletes all redundant rules based on a redundancy result.
10: The design personnel confirm to add the rule.
11: The rule designer performs unified compilation on the rule by using a storage function and stores the rule in a rule database.
704: Obtain first intent information, where the first intent information indicates to perform configuration management on the product.
705: Determine a first managed object of the product, an attribute of the first managed object, and a value of the attribute of the first managed object based on the first intent information.
706: Generate configuration information of the product based on the first managed object, the attribute of the first managed object, and the value of the attribute of the first managed object.
707: Obtain a constraints rule associated with the first managed object and the attribute of the first managed object.
708: Detect whether the configuration information of the product satisfies the constraints rule associated with the first managed object and the attribute of the first managed object.
709: If the configuration information of the product satisfies the constraints rule associated with the first managed object and the attribute of the first managed object, load the configuration information of the product onto the product.

Specific implementations of step 704 to step 709 have been described in the embodiment shown in FIG. 4, and a same or similar beneficial effect can be achieved. Details are not described herein again. It should be noted that generation and management of a constraints rule and generation and management of configuration information may be performed by a same electronic device, or may be performed by different electronic devices.

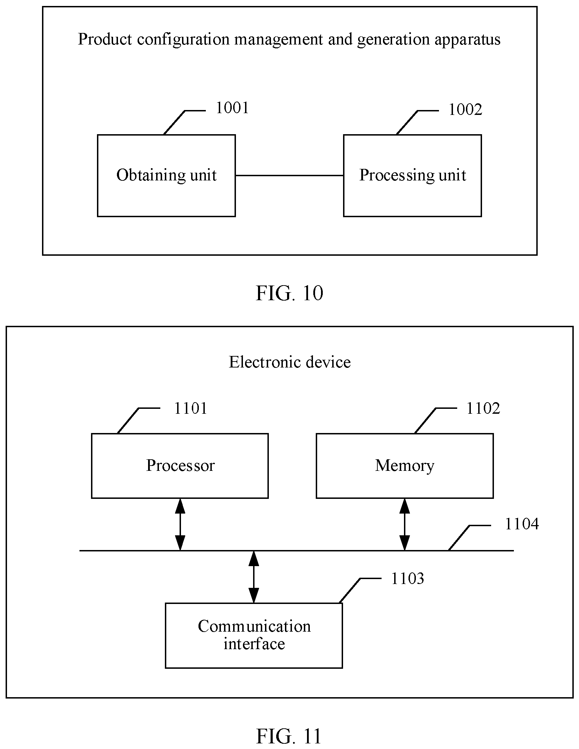

FIG. 10 is a diagram of a structure of a product configuration management and generation apparatus according to an embodiment of this application. As shown in FIG. 10, the apparatus may include an obtaining unit 1001 and a processing unit 1002.

The obtaining unit 1001 is configured to obtain first intent information, where the first intent information indicates to perform configuration management on a product.

The processing unit 1002 is configured to: determine a first managed object of the product, an attribute of the first managed object, and a value of the attribute of the first managed object based on the first intent information; and generate configuration information of the product based on the first managed object, the attribute of the first managed object, and the value of the attribute of the first managed object.

It can be learned that, in the apparatus shown in FIG. 10, when the user inputs the first intent information for performing configuration management on the product, the first managed object, the attribute of the first managed object, and the value of the attribute of the first managed object that need to be configured by the user may be determined through semantic recognition, so that the configuration information of the product can be generated based on the first managed object, the attribute of the first managed object, and the value of the attribute of the first managed object that are obtained through parsing, without the need for human expertise in complex domain knowledge nor human involvement to formulate the configuration information of the product through research, workshops, or other manual methods. This helps improve generation efficiency of the configuration information.

In a possible implementation, the obtaining unit 1001 is further configured to obtain a constraints rule associated with the first managed object and the attribute of the first managed object; and
the processing unit 1002 is further configured to: detect whether the configuration information of the product satisfies the constraints rule associated with the first managed object and the attribute of the first managed object; and if the configuration information of the product satisfies the constraints rule associated with the first managed object and the attribute of the first managed object, load the configuration information of the product onto the product.

In a possible implementation, the first intent information includes a first named entity of the first managed object and a second named entity of the attribute of the first managed object; and in generating the configuration information of the product based on the first managed object, the attribute of the first managed object, and the value of the attribute of the first managed object, the processing unit 1002 is specifically configured to:
obtain a first specification code of the first managed object and a second specification code of the attribute of the first managed object;
replace the first named entity in the first intent information with the first specification code, and replace the second named entity in the first intent information with the second specification code, to obtain second intent information; and
generate the configuration information of the product based on the second intent information.

In a possible implementation, the processing unit 1002 is further configured to:
if a constraints rule that the configuration information of the product cannot satisfy is present in the constraints rule associated with the first managed object and the attribute of the first managed object, output the constraints rule that the configuration information of the product cannot satisfy.

In a possible implementation, the obtaining unit 1001 is further configured to obtain third intent information, where the third intent information indicates to generate a constraints rule of the product; and
the processing unit 1002 is further configured to: determine a second managed object of the product, an attribute of the second managed object, and an attribute constraint of the attribute of the second managed object based on the third intent information; and generate the constraints rule of the product based on the second managed object of the product, the attribute of the second managed object, and the attribute constraint of the attribute of the second managed object.

In a possible implementation, the processing unit 1002 is further configured to:
perform conflict detection and redundancy detection on the generated constraints rule and an existing rule of the product; and
output a detection result.

In a possible implementation, if the generated constraints rule is in a conflict relationship with one or more first existing rules, the detection result includes the one or more first existing rules; or if the generated constraints rule is in a redundancy relationship with one or more second existing rules, the detection result includes the one or more second existing rules.

In a possible implementation, the processing unit 1002 is further configured to:
compile the generated constraints rule through unified compilation, to obtain a to-be-stored rule expressed in a unified programming language; and
store the to-be-stored rule.

In a possible implementation, the third intent information includes a third named entity of the second managed object and a fourth named entity of the attribute of the second managed object; and in generating the constraints rule of the product based on the second managed object of the product, the attribute of the second managed object, and the attribute constraint of the attribute of the second managed object, the processing unit 1002 is specifically configured to:
obtain a third specification code of the second managed object and a fourth specification code of the attribute of the second managed object;
replace the third named entity in the third intent information with the third specification code, and replace the fourth named entity in the third intent information with the fourth specification code, to obtain fourth intent information; and
generate the constraints rule of the product based on the fourth intent information.

It should be noted that, for implementations of the units described in FIG. 10, refer to corresponding descriptions of the embodiments shown in FIG. 4 to FIG. 9. In addition, for beneficial effects brought by the communication apparatus described in FIG. 10, refer to corresponding descriptions of the embodiments shown in FIG. 4 to FIG. 9. Details are not described herein again.

Based on the descriptions of the foregoing method embodiments and the foregoing apparatus embodiments, an embodiment of this application further provides an electronic device. FIG. 11 is a diagram of a structure of an electronic device according to an embodiment of this application. The electronic device at least includes a processor 1101, a memory 1102, and a communication interface 1103. The processor 1101, the memory 1102, and the communication interface 1103 are connected to each other through a bus 1104. The electronic device may be configured to perform a related step of the product configuration management and generation method. The electronic device may be a device of a unified configuration validation technical system, or a chip in the device. The processor 1101 in the electronic device is configured to read computer program code stored in the memory 1102, to perform the method according to any one of the embodiments shown in FIG. 4 to FIG. 9.

The memory 1102 includes, but is not limited to, a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 1102 is configured to store a related computer program and data.

The processor 1101 may be one or more central processing units (central processing unit, CPU). When the processor 1101 is one CPU, the CPU may be a single-core CPU or a multicore CPU.

For example, the processor 1101 in the electronic device may be configured to read one or more programs stored in the memory 1102, to perform the following operations:
obtaining first intent information, where the first intent information indicates to perform configuration management on a product;
determining a first managed object of the product, an attribute of the first managed object, and a value of the attribute of the first managed object based on the first intent information; and
generating configuration information of the product based on the first managed object, the attribute of the first managed object, and the value of the attribute of the first managed object.

In a possible implementation, after generating the configuration information of the product based on the first managed object, the attribute of the first managed object, and the value of the attribute of the first managed object, the processor 1101 is further configured to:
obtain a constraints rule associated with the first managed object and the attribute of the first managed object;
detect whether the configuration information of the product satisfies the constraints rule associated with the first managed object and the attribute of the first managed object; and
if the configuration information of the product satisfies the constraints rule associated with the first managed object and the attribute of the first managed object, load the configuration information of the product onto the product.

In a possible implementation, the first intent information includes a first named entity of the first managed object and a second named entity of the attribute of the first managed object; and that the processor 1101 performs generation of the configuration information of the product based on the first managed object, the attribute of the first managed object, and the value of the attribute of the first managed object includes:
obtaining a first specification code of the first managed object and a second specification code of the attribute of the first managed object;
replacing the first named entity in the first intent information with the first specification code, and replacing the second named entity in the first intent information with the second specification code, to obtain second intent information; and
generating the configuration information of the product based on the second intent information.

In a possible implementation, the processor 1101 is further configured to:
if a constraints rule that the configuration information of the product cannot satisfy is present in the constraints rule associated with the first managed object and the attribute of the first managed object, output the constraints rule that the configuration information of the product cannot satisfy.

In a possible implementation, before obtaining the first intent information, the processor 1101 is further configured to:
obtain third intent information, where the third intent information indicates to generate a constraints rule of the product;
determine a second managed object of the product, an attribute of the second managed object, and an attribute constraint of the attribute of the second managed object based on the third intent information; and
generate the constraints rule of the product based on the second managed object of the product, the attribute of the second managed object, and the attribute constraint of the attribute of the second managed object.

In a possible implementation, the processor 1101 is further configured to:
perform conflict detection and redundancy detection on the generated constraints rule and an existing rule of the product; and
output a detection result.

In a possible implementation, if the generated constraints rule is in a conflict relationship with one or more first existing rules, the detection result includes the one or more first existing rules; or if the generated constraints rule is in a redundancy relationship with one or more second existing rules, the detection result includes the one or more second existing rules.

In a possible implementation, the processor 1101 is further configured to:
compile the generated constraints rule through unified compilation, to obtain a to-be-stored rule expressed in a unified programming language; and
store the to-be-stored rule.

In a possible implementation, the third intent information includes a third named entity of the second managed object and a fourth named entity of the attribute of the second managed object; and that the processor 1101 performs generation of the constraints rule of the product based on the second managed object of the product, the attribute of the second managed object, and the attribute constraint of the attribute of the second managed object includes:
obtaining a third specification code of the second managed object and a fourth specification code of the attribute of the second managed object;
replacing the third named entity in the third intent information with the third specification code, and replacing the fourth named entity in the third intent information with the fourth specification code, to obtain fourth intent information; and
generating the constraints rule of the product based on the fourth intent information.

It should be noted that, for an implementation of each operation, refer to corresponding descriptions of the method according to any one of the embodiments shown in FIG. 4 to FIG. 9.

It should be noted that although only the processor 1101, the memory 1102, the communication interface 1103, and the bus 1104 of the electronic device shown in FIG. 11 are illustrated, in a specific implementation process, a person skilled in the art should understand that the electronic device further includes another component necessary for normal operation. In addition, based on a specific requirement, a person skilled in the art should understand that the electronic device may further include a hardware component for implementing another additional function. In addition, a person skilled in the art should understand that the electronic device may include only components necessary for implementing embodiments of this application, but not necessarily include all the components shown in FIG. 11.

An embodiment of this application further provides a chip. The chip includes a processor, configured to invoke a computer program from a memory and run the computer program, to cause a device equipped with the chip to perform the method described in any one of the embodiments in FIG. 4 to FIG. 9. The chip may be a chip in an electronic device.

An embodiment of this application further provides a computer-readable storage medium (Memory). The computer-readable storage medium stores a computer program, and when the computer program is run, the method described in any one of the embodiments in FIG. 4 to FIG. 9 is implemented. It may be understood that the computer-readable storage medium herein may include a built-in storage medium in a device, and certainly may also include an expanded storage medium supported by the device. The computer-readable storage medium provides storage space, and the storage space stores an operating system of the device. In addition, the storage space further stores one or more computer programs suitable for being loaded and executed by a processor of the device. It should be noted that the computer-readable storage medium herein may be a high-speed RAM, or may be a non-volatile memory (non-volatile memory), for example, at least one magnetic disk memory. Optionally, the computer-readable storage medium may be at least one computer-readable storage medium located far away from the processor.

An embodiment of this application further provides a computer program product. The computer program product includes computer program code. When the computer program code is run on an electronic device, the method procedure described in any one of the embodiments in FIG. 4 to FIG. 9 is implemented.

In the foregoing embodiments, the description of each embodiment has respective focuses. For a part that is not described in detail in an embodiment, refer to related descriptions in other embodiments.

It should be understood that the processor mentioned in embodiments of this application may be a CPU, or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, a discrete hardware component, or the like. The general-purpose processor may be a microprocessor, or the processor may be any conventional processor or the like.

It may be understood that the memory mentioned in embodiments of this application may be a volatile memory or a non-volatile memory, or may include a volatile memory and a non-volatile memory. The non-volatile memory may be a ROM, a programmable read-only memory (Programmable ROM, PROM), an EPROM, an electrically erasable programmable read-only memory (Electrically EPROM, EEPROM), or a flash memory. The volatile memory may be a RAM, and is used as an external cache. Through illustrative but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that, when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include, but is not limited to, these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

In the several embodiments provided in this application, it should be understood that the disclosed system, apparatus, and method may be implemented in other manners. For example, the foregoing apparatus embodiments are merely examples. For example, division into the units is merely logical function division. In an actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit. When the foregoing integrated unit is implemented in the form of a software functional unit and sold or used as an independent product, the integrated unit may be stored in a computer-readable storage medium.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In text descriptions of this application, a character "/" usually indicates an "or" relationship between associated objects.

The steps of the method in embodiments of this application may be reordered, combined, or removed based on an actual requirement.

The modules of the apparatus in embodiments of this application may be combined, divided, or removed based on an actual requirement.

In conclusion, the foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may be made to some technical features thereof. These modifications or replacements do not cause the essence of the corresponding technical solutions to depart from the scope of the technical solutions of embodiments of this application.

## Claims

1. A product configuration management and generation method, wherein the method comprises:
obtaining first intent information, wherein the first intent information indicates to perform configuration management on a product;
determining a first managed object of the product, an attribute of the first managed object, and a value of the attribute of the first managed object based on the first intent information; and
generating configuration information of the product based on the first managed object, the attribute of the first managed object, and the value of the attribute of the first managed object.

2. The method according to claim 1, wherein after generating the configuration information of the product based on the first managed object, the attribute of the first managed object, and the value of the attribute of the first managed object, the method further comprises:
obtaining a constraints rule associated with the first managed object and the attribute of the first managed object;
detecting whether the configuration information of the product satisfies the constraints rule associated with the first managed object and the attribute of the first managed object; and
if the configuration information of the product satisfies the constraints rule associated with the first managed object and the attribute of the first managed object, loading the configuration information of the product onto the product.

3. The method according to claim 1 or 2, wherein the first intent information comprises a first named entity of the first managed object and a second named entity of the attribute of the first managed object; and generating the configuration information of the product based on the first managed object, the attribute of the first managed object, and the value of the attribute of the first managed object comprises:
obtaining a first specification code of the first managed object and a second specification code of the attribute of the first managed object;
replacing the first named entity in the first intent information with the first specification code, and replacing the second named entity in the first intent information with the second specification code, to obtain second intent information; and
generating the configuration information of the product based on the second intent information.

4. The method according to claim 2, wherein the method further comprises:
if a constraints rule that the configuration information of the product cannot satisfy is present in the constraints rule associated with the first managed object and the attribute of the first managed object, outputting the constraints rule that the configuration information of the product cannot satisfy.

5. The method according to any one of claims 1 to 4, wherein before obtaining the first intent information, the method further comprises:
obtaining third intent information, wherein the third intent information indicates to generate a constraints rule of the product;
determining a second managed object of the product, an attribute of the second managed object, and an attribute constraint of the attribute of the second managed object based on the third intent information; and
generating the constraints rule of the product based on the second managed object of the product, the attribute of the second managed object, and the attribute constraint of the attribute of the second managed object.

6. The method according to claim 5, wherein the method further comprises:
performing conflict detection and redundancy detection on the generated constraints rule and an existing rule of the product; and
outputting a detection result.

7. The method according to claim 6, wherein if the generated constraints rule is in a conflict relationship with one or more first existing rules, the detection result comprises the one or more first existing rules; or if the generated constraints rule is in a redundancy relationship with one or more second existing rules, the detection result comprises the one or more second existing rules.

8. The method according to claim 6, wherein the method further comprises:
compiling the generated constraints rule through unified compilation, to obtain a to-be-stored rule expressed in a unified programming language; and
storing the to-be-stored rule.

9. The method according to any one of claims 5 to 8, wherein the third intent information comprises a third named entity of the second managed object and a fourth named entity of the attribute of the second managed object; and generating the constraints rule of the product based on the second managed object of the product, the attribute of the second managed object, and the attribute constraint of the attribute of the second managed object comprises:
obtaining a third specification code of the second managed object and a fourth specification code of the attribute of the second managed object;
replacing the third named entity in the third intent information with the third specification code, and replacing the fourth named entity in the third intent information with the fourth specification code, to obtain fourth intent information; and
generating the constraints rule of the product based on the fourth intent information.

10. A product configuration management and generation apparatus, wherein the apparatus comprises an obtaining unit and a processing unit, wherein
the obtaining unit is configured to obtain first intent information, wherein the first intent information indicates to perform configuration management on a product; and
the processing unit is configured to: determine a first managed object of the product, an attribute of the first managed object, and a value of the attribute of the first managed object based on the first intent information; and generate configuration information of the product based on the first managed object, the attribute of the first managed object, and the value of the attribute of the first managed object.

11. The apparatus according to claim 10, wherein the obtaining unit is further configured to obtain a constraints rule associated with the first managed object and the attribute of the first managed object; and
the processing unit is further configured to: detect whether the configuration information of the product satisfies the constraints rule associated with the first managed object and the attribute of the first managed object; and if the configuration information of the product satisfies the constraints rule associated with the first managed object and the attribute of the first managed object, load the configuration information of the product onto the product.

12. The apparatus according to claim 10 or 11, wherein the first intent information comprises a first named entity of the first managed object and a second named entity of the attribute of the first managed object; and in generating the configuration information of the product based on the first managed object, the attribute of the first managed object, and the value of the attribute of the first managed object, the processing unit is specifically configured to:
obtain a first specification code of the first managed object and a second specification code of the attribute of the first managed object;
replace the first named entity in the first intent information with the first specification code, and replace the second named entity in the first intent information with the second specification code, to obtain second intent information; and
generate the configuration information of the product based on the second intent information.

13. The apparatus according to claim 11, wherein the processing unit is further configured to:
if a constraints rule that the configuration information of the product cannot satisfy is present in the constraints rule associated with the first managed object and the attribute of the first managed object, output the constraints rule that the configuration information of the product cannot satisfy.

14. The apparatus according to any one of claims 10 to 13, wherein the obtaining unit is further configured to obtain third intent information, wherein the third intent information indicates to generate a constraints rule of the product; and
the processing unit is further configured to: determine a second managed object of the product, an attribute of the second managed object, and an attribute constraint of the attribute of the second managed object based on the third intent information; and generate the constraints rule of the product based on the second managed object of the product, the attribute of the second managed object, and the attribute constraint of the attribute of the second managed object.

15. The apparatus according to claim 14, wherein the processing unit is further configured to:
perform conflict detection and redundancy detection on the generated constraints rule and an existing rule of the product; and
output a detection result.

16. The apparatus according to claim 15, wherein if the generated constraints rule is in a conflict relationship with one or more first existing rules, the detection result comprises the one or more first existing rules; or if the generated constraints rule is in a redundancy relationship with one or more second existing rules, the detection result comprises the one or more second existing rules.

17. The apparatus according to claim 15, wherein the processing unit is further configured to:
compile the generated constraints rule through unified compilation, to obtain a to-be-stored rule expressed in a unified programming language; and
store the to-be-stored rule.

18. The apparatus according to any one of claims 14 to 17, wherein the third intent information comprises a third named entity of the second managed object and a fourth named entity of the attribute of the second managed object; and in generating the constraints rule of the product based on the second managed object of the product, the attribute of the second managed object, and the attribute constraint of the attribute of the second managed object, the processing unit is specifically configured to:
obtain a third specification code of the second managed object and a fourth specification code of the attribute of the second managed object;
replace the third named entity in the third intent information with the third specification code, and replace the fourth named entity in the third intent information with the fourth specification code, to obtain fourth intent information; and
generate the constraints rule of the product based on the fourth intent information.

19. An electronic device, comprising a processor, a memory, a communication interface, and one or more programs, wherein the one or more programs are stored in the memory, and when the one or more programs are configured to be executed by the processor, the one or more programs cooperate with the communication interface to implement the method according to any one of claims 1 to 9.

20. A computer-readable storage medium, wherein the computer-readable storage medium stores a computer program to be executed by a device, and when the computer program is executed, the method according to any one of claims 1 to 9 is implemented.

21. A computer program product, wherein when the computer program product runs on a device, the device is caused to perform the method according to any one of claims 1 to 9.
